# EUROPEAN PATENT SPECIFICATION

(11) **EP 0 872 527 B1**
(45) Date of publication and mention of the grant of the patent: **12.06.2002**
(21) Application number: 97500066.2
(22) Date of filing: 16.04.1997
(51) Int. Cl.: C09D 127/06, C08L 27/06

(54) **Composition of a paint or surfacer with improved soundproofing and abrasion resistance properties**
Lackzusammensetzung mit verbesserten schalldämmenden und abriebfesten Eigenschaften
Composition de peinture à propriétés d'isolation acoustique et de résistance à l'abrasion améliorées

(43) Date of publication of application: 21.10.1998
(73) Proprietor: Seat, S.A., 08040 Barcelona (ES); Gurit-Essex (Espana), S.A., 28820 Coslada (Madrid) (ES)
(72) Inventor: Bosch Puig, Joan, 08190 Valldoreix (Barcelona) (ES); Harzbecher, Martin, 08190 Sant Cugat del Vallés(Barcelona) (ES)
(74) Representative: Davila Baz, Angel

(56) References cited:
- AT-A- 307 718
- FR-A- 1 004 062
- US-A- 1 966 856

## Description

This invention relates to a composition for the coating of metallic and non-metallic surfaces, which is provided of excellent sound-proofing and abrasion resistance properties.

More specifically, the present invention is related to a coating composition in the form of a paint or surfacer based on resins of polyvinyl chloride (PVC) and of copolymers of polyvinyl chloride / vinyl acetate (PVAc), suited to confer sound-proofing and abrasion resistance to the surfaces coated with said composition.

The coating composition according to the invention is applicable, as has already been indicated, to metallic and non-metallic surfaces, but for convenience purposes, the invention is described making reference to the application of the composition on metallic surfaces, such as the parts of an automobile which are exposed to abrasion by elements such as gravel, sand, water, salt, etc., for example, wheel housings, outer area of the boot and similar parts, to protect said parts from the damage that said elements could cause, and at the same time, to sound-proof the vehicle and absorb the impacts produced by such elements on the bodywork.

By the current state of the art, a wide range of paint compositions are known which are designed for the protection of the underside of the vehicles, essentially designed to confer anti-corrosion properties to surfaces which are coated with such compositions. However, although said known compositions provide satisfactory results in relation to corrosion resistance, none of them exhibit the sound-proofing and abrasion resistance properties shown by the compositions of the present invention.

It has now been discovered that the incorporation of a load of powdered cork into the compositions of paints or surfacers which have a PVC and PVAc base, leads to the obtention of coatings which exhibit said properties of sound-proofing and abrasion resistance, as a consequence of the resilient characteristics of the cork.

Equally, the addition of a load of cork into the compositions of paints or surfacers, leads to a considerable reduction in the density of the paint or surfacer, with the corresponding advantage of the weight reduction of the paint or surfacer in the vehicle as compared to the application of an equal weight of a composition which reflects the state of the art.

Therefore, and according to the present invention, a composition for a paint or surfacer is provided which is constituted by a dispersion of resins of polyvinyl chloride and of copolymers of polyvinyl chloride / vinyl acetate in a plastifyer, the composition is which is characterized in that it incorporates a load of powdered cork.

According to the present invention, the load of cork is employed in a micronized form and possesses the following properties:

| | | |
|---|---|---|
| Density | | 0.10 +/- 0.02 g/cc. |
| Grading | | |
| | Retained by a 250 micron sieve | 0% |
| | Retained by a 100 micron sieve | 10-20% |
| | Retained by a 80 micron sieve | 20-30% |
| | Retained by a 60 micron sieve | 15-20% |
| | Retained by a 40 micron sieve | 20-30% |
| | Passes a 40 micron sieve | 40-50% |

The composition of the paint or surfacer of the invention additionally contains adhesion agents and other agents such as thixotropics, colorants, stabilizers, and extenders / reducers of viscosity to facilitate the application of the composition.

Preferably, the plastifyers used in the compositions according to the invention are phthalate based and the rest of the agents incorporated in the compositions are of the kinds already known for the purposes previously mentioned.

According to what was stated previously, the present invention provides a composition for a paint or surfacer for the coating of metallic and non-metallic surfaces, which has sound-proofing and abrasion resistance properties, the composition of which comprises the following components in the quantities indicated:

| | |
|---|---|
| a) PVC/PVAc resins | 20 - 30 % |
| b) plastifyers | 30 - 45 % |
| c) adhesives | 1 - 2 % |
| d) stabilizers | 0.5 - 1 % |
| e) colorants | 1 - 2 % |
| f) thixotropics | 5 - 10 % |
| g) micronized cork | 2 - 10 % |
| h) dilutants | 4 - 8 % |

The physical - chemical properties of the compositions of paint or surfacer of the invention were measured, obtaining the following values:

| | |
|---|---|
| Density: | 1.10 +/- 0.02 |
| Viscosity (Rheomat 265) | 1.30 +/- 0.1 Pas |
| Yield point | 180 - 220 Pa. |
| Abrasion resistance | 300 - 325 sec. |
| Resistance in constant humidity chamber | OK (6 months) |
| Gelification temperature | 150 - 160°C. 30 min |

As a consequence of the previously enumerated properties, it has been possible to verify that, when applied to the underside of automobiles, the compositions of paint or surfacer according to the present invention provide the following advantages:
Reduction of the weight of the car: the lower density of the cork containing surfacer/paint according to the invention in relation to the conventional ones (between 1.3-1.4 g/cm³), leads to an important reduction in the amount applied per car for a same given thickness applied. Therefore, for an average type car, the reduction is of some 3 kg, which represents a saving of approximately 30%.
Improvements in abrasion resistance: the resilient properties of cork produce a remarkable improvement in the abrasion resistance of a layer of 400-400 microns of thickness. Thus, in the case of a normal paint/surfacer the abrasion resistance is valued as approximately 180 seconds (time required to abrade the layer of paint and reach the plate). In the case of a cork containing surfacer/paint this resistance approaches 300-325 sec.
Reduction in the application pressure: the use of the cork containing surfacer/paint according to the invention reduces the pressure of application in the air-less system. There are many points of application, and the circumstances are different in each of them; it has however been observed that, in average, the reduction of the application pressure has been of 20%. This represents less operator fatigue and less wear on the installation.
Nozzle wearing: the reduced application pressure and the nature of the powdered cork, which is a load which has a very low hardness, leads to a reduced wearing of the application nozzles, which provides an economic advantage and leads to a safer application.
Environment: the reduced amount in the material applied per car represents an environmental improvement, since the amount of material to be eliminated during the recycling of the car at the end of its active life is smaller. It also implies less recycling of material originating from the purges, of material dropped on the floor during the application, etc.
Improvement in the level of noise: the cork containing surfacer/paint according to the invention, leads to a reduction in the transmission of impact noise. The maximum amplitude goes down from 20 to 15, which represents a 25% improvement in the intensity of the emitted noise.

The paint or surfacer compositions according to the invention can be obtained by normal processes used for this type of polyvinyl chloride plastisols.

The examples given hereunder are provided by way of illustration, and not limitation, of the obtention of paint or surfacer compositions according to the invention.

### Example 1

50-65% of b) and all the other remaining materials a), c), e), f) and g) are added consecutively to a double impeller Sigma-type mixing machine, the impellers of which rotate at different speeds, allowing it to run for approximately 30 minutes, until an adequate degree of dispersion and fineness is achieved. Finally the diluting agent and the rest of b) are added until the desired viscosity is obtained.

### Example 2

b) and h) are initially added to a rapid agitator machine of the type known as Dispermix, followed by a), c), e), f) and g), allowing it to run for approximately 30 minutes, until an adequate degree of dispersion and fineness is achieved.

In both examples of manufacturing process it is necessary to maintain an adequate control of the temperature to avoid pregelifications.

The paint/ surfacer composition according to the invention gelifies as it passes through the consecutive paint ovens.

The most adequate times and temperatures of gelification are within the following limits: 20 - 30 minutes at between 150-160 °C.

The composition according to the invention can be applied with a pneumatic pump, an air-less system and with the gun, nozzles, fluid peaks and pressures adequate to each point where it is to be applied on the car.

## Claims

1. A composition in the form of a paint or surfacer with improved sound-proofing and abrasion resistance properties, constituted by a dispersion of resins of polyvinyl chloride and copolymers of polyvinyl chloride / acetate in a plastifyer, **characterized in that** it incorporates a load of powdered cork.

2. A composition according to claim 1 **characterized in that** the load of powdered cork has a density of 0.10 +/-0.02 g/cc and has the following grading:
- Retained by a 250 micron sieve 0%
- Retained by a 100 micron sieve 10-20%
- Retained by a 80 micron sieve 20-30%
- Retained by a 60 micron sieve 15-20%
- Retained by a 40 micron sieve 20-30%
- Passes a 40 micron sieve 40-50%

3. A composition according to claims 1 and 2 **characterized in that** it additionally comprises adhesion agents and other agents such as thixotropics, colorants, stabilizers, and extenders / reducers of viscosity to facilitate the application of the composition.

4. A composition according to claims 1 to 3 **characterized in that** it comprises the following components in the quantities indicated:
| | |
|---|---|
| a) PVC/PVAc resins | 20 - 30 % |
| b) plastifyers | 30 - 45 % |
| c) adhesives | 1 - 2 % |
| d) stabilizers | 0.5 - 1 % |
| e) colorants | 1 - 2 % |
| f) thixotropics | 5 - 10 % |
| g) micronized cork | 2 - 10 % |
| h) dilutants | 4 - 8 % |

5. The use of a paint or surfacer composition according to claims 1 to 4, for the coating of metallic and non-metallic surfaces.

6. The use according to claim 5, for the protection of automobile parts exposed to abrasion and impact by elements such as gravel, sand, water and salt.

7. The use according to claim 6, for the protection of the underside of automobiles.

## Patentansprüche

1. Zusammensetzung in Form eines Farbmittels oder in Form eines Grundiermittels mit verbesserten schalldämpfenden Eigenschaften und verbesserter Abriebfestigkeit enthaltend eine Dispersion von Polyvinylchlorid-Harzen und von Polyvinylchlorid/Polyvinylacetat-Copolymer-Harzen in einem Weichmacher, **dadurch gekennzeichnet, dass** sie eine Füllung aus gepulvertem Kork enthält.

2. Zusammensetzung nach Anspruch 1, **dadurch gekennzeichnet, dass** die Füllung aus gepulvertem Kork eine Dichte von 0,10 +/- 0,02 g/cm³ und folgende Korngrößenaufteilung aufweist:
| | |
|---|---|
| zurückgehalten von einem 250 µm-Sieb | 0 % |
| zurückgehalten von einem 100 µm-Sieb | 10 - 20 % |
| zurückgehalten von einem 80 µm-Sieb | 20 - 30 % |
| zurückgehalten von einem 60 µm-Sieb | 15 - 20 % |
| zurückgehalten von einem 40 µm-Sieb | 20 - 30 % |
| durchgängig durch ein 40 µm-Sieb | 40 - 50 %. |

3. Zusammensetzung nach Anspruch 1 oder 2, **dadurch gekennzeichnet, dass** die Zusammensetzung zusätzliche Haftmittel und andere Hilfsmittel wie Thixotropierungsmittel, Farbstoffe, Stabilisatoren und die Viskosität erhöhende oder reduzierende Substanzen enthält, um die Anwendung der Zusammensetzung zu erleichtern.

4. Zusammensetzung nach einem der Ansprüche 1 bis 3, **dadurch gekennzeichnet, dass** die Zusammensetzung die folgenden Bestandteile in den angezeigten Mengen enthält:
| | |
|---|---|
| a) Polyvinylchlorid/Polyvinylacetat-Harze | 20 - 30 % |
| b) Weichmacher | 30 - 45 % |
| c) Haftmittel | 1 - 2 % |
| d) Stabilisatoren | 0,5 - 1 % |
| e) Farbstoffe | 1 - 2% |
| f) Thixotropierungsmittel | 5 - 10 % |
| g) feinstzerkleinerten Kork | 2 - 10 % |
| h) Verdünnungsmittel | 4 - 8 %. |

5. Verwendung einer Farb- oder Grundiermittel-Zusammensetzung nach einem der Ansprüche 1 bis 4, um damit metallische und nicht-metallische Oberflächen zu bedecken.

6. Verwendung nach Anspruch 5 zum Schutz von Automobilteilen, die Abrieb und Stößen durch Substanzen wie Kies, Sand, Wasser und Salz ausgesetzt sind.

7. Verwendung nach Anspruch 6, um die Unterseite von Automobilen zu schützen.

## Revendications

1. Composition sous forme d'une peinture ou d'un agent de surface ayant des propriétés d'insonorisation et de résistance à l'abrasion améliorées, constituée d'une dispersion de résines de poly(chlorure de vinyle) et de copolymères de poly(chlorure de vinyle)/acétate de vinyle dans un plastifiant, **caractérisée en ce qu'**elle contient une charge de liège pulvérulent.

2. Composition selon la revendication 1, **caractérisée en ce que** la charge de liège pulvérulent a une masse volumique de 0,10 ± 0,02 g/cm³ et a le calibrage suivant :
- retenu par un tamis de 250 microns 0 %
- retenu par un tamis de 100 microns 10-20 %
- retenu par un tamis de 80 microns 20-30 %
- retenu par un tamis de 60 microns 15-20 %
- retenu par un tamis de 40 microns 20-30 %
- traverse un tamis de 40 microns 40-50 %

3. Composition selon les revendications 1 et 2, **caractérisée en ce qu'**elle comprend, en plus, des agents d'adhérence et d'autres agents, tels que des agents thixotropes, des colorants, des stabilisants et des diluants / réducteurs de viscosité pour faciliter l'application de la composition.

4. Composition selon les revendications 1 à 3, **caractérisée en ce qu'**elle comprend les composants suivants dans les quantités indiquées :
| | |
|---|---|
| a) résines de PVC/PVAc | 20 - 30 % |
| b) plastifiants | 30 - 45 % |
| c) adhésifs | 1 - 2 % |
| d) stabilisants | 0,5 - 1 % |
| e) colorants | 1 - 2 % |
| f) agents thixotropes | 5 - 10 % |
| g) liège micronisé | 2 - 10 % |
| h) diluants | 4 - 8 % |

5. Utilisation d'une composition de peinture ou d'agent de surface selon les revendications 1 à 4, pour le revêtement de surfaces métalliques et non métalliques.

6. Utilisation selon la revendication 5, pour la protection de pièces automobiles exposées à une abrasion et à des chocs par des éléments tels que les gravillons, le sable, l'eau et le sel.

7. Utilisation selon la revendication 6, pour la protection du dessous d'automobiles.
